# EUROPÄISCHE PATENTANMELDUNG

(11) **EP 0 982 889 A1**
(43) Veröffentlichungstag der Anmeldung: **01.03.2000**
(21) Anmeldenummer: 98116320.7
(22) Anmeldetag: 28.08.1998
(51) Int. Cl.: H04J 3/06

(54) **Elektrische Schaltung mit einem Taktgenerator zur Erzeugung eines internen Taktes sowie entsprechendes Verfahren**

(71) Anmelder: SIEMENS AKTIENGESELLSCHAFT, 80333 München (DE)
(72) Erfinder: Hennen, Stefan Dipl.-Ing., 82131 Gauting (DE); Roder, Annette Dipl.-Ing., 81377 München (DE); Skorka, Klemens Dr., 80807 München (DE); Steinigke, Klaus Dr., 81371 München (DE)

(57) **Zusammenfassung**

Ein digitales Vermittlungssystem, bei dem ein interner Takt von einem zentralen Taktgenerator erzeugt wird, der im Masters/Slave-Modus arbeitet. Bei einer Störung des Signals auf dem Verbindungskabel übernimmt der bisherige Clock-Slave die Master-Rolle. Dadurch, daß über das Verbindungskabel am ehemaligen Master ein Signal ankommt, erkennt dieser, daß er nicht mehr Master ist und synchronisiert sich auf den Takt des neuen Masters auf. Auf diese Weise lassen sich Fehler bei Ausfall oder Abschaltung des bisherigen Clock-Masters vermeiden.

## Beschreibung

Die Erfindung bezieht sich auf ein Verfahren zur Erzeugung eines internen Taktes gemäß dem Oberbegriff des Patentanspruches 1 und auf eine elektrische Schaltung mit einem zentralen Taktgenerator zur Erzeugung eines internen Taktes gemäß dem Oberbegriffs des Patentanspruchs 2. Die Erfindung bezieht sich insbesondere auf ein Telekommunikationssystem mit einem zentralen Taktgenerator zur Erzeugung eines internen Taktes.

Telekommunikationssysteme werden für alle nachrichtentechnischen Übertragungsverfahren verwendet, bei denen eine Kommunikation über eine größere Entfernung geschaffen wird. Die Übertragungstechnik umfaßt Kabelübertragungstechnik, Sprech- und Datenfunk, Satellitentechnik, Modems, digitale Vermittlungsanlagen und Vermittlungstechnik und lokale Netze.

Um einen sinnvollen Nachrichtenaustausch zwischen zwei oder mehreren Partnern zu ermöglichen, ist neben der reinen Übertragung von Nachrichten ein Regelwerk erforderlich, das die für die Kommunikation einzuhaltenden Regeln in Form von Protokollen festlegt. Derartige Regeln werden z.B. in den Dienstspezifikationen der einzelnen Ebenen des OSI-Referenzmodells (open systems interconnection) beschrieben. Das von der Internationalen Standardisierungsorganisation erstellte OSI-Referenzmodell stellt lediglich Prinzipien der Nachrichtenübertragung dar und definiert somit nur die Logik des Informationsflusses zwischen Teilnehmern. Da der OSI-Standard keine Festlegungen über die physikalische Übertragung der Nachrichten beinhaltet, ist dieser Hersteller unabhängig, bedarf jedoch zur Realisierung eines Kommunikationssystems ergänzende Protokolle.

Grundsätzlich lassen sich asynchrone und synchrone Übertragung unterscheiden. Asynchrone Übertragung bedeutet ein zeitlich entkoppelter Austausch von Nachrichten von einem Sender zu einem Empfänger. Demgegenüber wird unter synchroner Übertragung ein Gleichlauf zwischen Sender und Empfänger verstanden. Dabei müssen eine Sende- und die zugehörige Empfangsoperation immer zeitgleich ausgeführt werden.

Telekommunikationsnetzwerke sind durch die Möglichkeit des bi- und multidirektionalen Datenaustausches zwischen den Teilnehmern gekennzeichnet. Dies setzt jedoch voraus, daß jeder beteiligte Teilnehmer mit jedem anderen über dasselbe Medium kommunizieren kann. Aufgrund verschiedener Standards für Übertragungsnetze (z.B. PDH, SDH oder SONET) sind die Kommunikationssysteme erforderlich, die Verbindungen zu mehreren dieser Übertragungsnetze herstellen können. Ein solches Telekommunikationssystem besitzt für jeden unterschiedlichen Übertragungsstandard eine eigene Schnittstelle.

Die vorherrschenden Übertragungsstandards sind die plesiochrone digitale Hierarchie (PDH) und die synchrone digitale Hierarchie (SDH). Dabei wird die seit den 60-er Jahren vorherrschende plesiochrone digitale Hierarchie zunehmend durch die neue und leistungsfähigere synchrone digitale Hierarchie abgelöst.

Die plesiochrone digitale Hierarchie multiplext die in PCM-Form (puls code modulation) vorliegenden Daten verschiedener Endsysteme bitweise in einen Datenstrom. Eine Hierarchiestufe ist dabei durch die Anzahl der von dieser gemultiplexten Basiskanäle bzw. der Rahmen der darunterliegenden Hierarchiestufe gekennzeichnet.

Unterschiedliche Übertragungsraten eines Basiskanals führte zur Ausbildung inkompatibler PDH-Hierarchien in Europa und den USA. Der in den USA vorherrschende DS1-Standard sieht drei Hierarchiestufen vor, während der europäische E1-Standard fünf Stufen vorsieht. Bedingt durch die plesiochrone Übertragung entsprechen die nominellen Übertragungsraten nicht exakt den Vielfachen der jeweils niedrigeren Stufe, sondern sind geringfügig höher angesiedelt. Die damit aufgrund der zulässigen Schwankungen auftretende Lücke innerhalb einer Hierarchiestufe wird durch Stopfbits, die keine Information enthalten, gefüllt. Der eminente Nachteil des PDH-Verfahrens spiegelt sich im Zugriff auf einzelne Basiskanäle oder Rahmen niedrigerer Hierarchiestufen wieder. Das Extrahieren eines Basiskanals erfordert ein komplettes stufenweises Demultiplexen. Ein direkter Zugriff ist, anders als bei SDH nicht möglich.

Der verstärkte Einsatz von Lichtwellenleitern führte zur Entwicklung eines neuen leistungsfähigeren Ansatzes, der die veraltete PDH-Technik ablösen sollte. Aus dem in den USA entwickelten Standard SONET (synchronous optical network) resultierte der von der International Telecommunications Union (ITU) verabschiedete internationale Standard SDH. SONET ermöglicht erstmals die Verbindung von Terminals verschiedener Hersteller in standardisierter Form sowie eine direkte Verbindung von optischen Multiplexern mit digitalen Kreuzschienenverteilern. Dabei werden Datenraten von 51,84 Mbit/s bis über 2,4 Gbit/s erreicht.

Der SDH-Standard wird auch als internationale Variante von SONET bezeichnet. Der SDH-Standard basiert auf der synchronen Übertragung von Nutzinformation unter Verwendung von synchronen Transportmodulen (STM) mit einheitlicher Struktur. Das Basistransportmodul ist der STM-1-Rahmen. Die Übertragung dieses Rahmens erfolgt mit einer Bitrate von etwa 155 Mbit/s. Der STM 1-Rahmen teilt sich in ein Nutzfeld (Payload) und ein Kopffeld (Overhead). Abhängig von der Struktur und der Übertragungsrate der zu übertragenden Informationen ist das Nutzfeld verschieden strukturiert. In einem STM-1-Modul kann beispielsweise eine kontinuierliche Folge ATM-Zellen transportiert werden. Welche Bitrate die übertragenen Systeme im Nutzfeld haben und wie sie strukturiert sind, ist im Kopffeld festgehalten. Weiterhin sind im Kopffeld zusätzliche Informationen enthalten, die zum Betrieb der SDH-Systeme erforderlich sind. Da SDH 64-kbit/s-Systeme genauso wie ATM-Zellenströme transportiert, ist sie die ideale Übertragungsart für verschieden strukturierte Informationsschlüsse. Geringe Übertragungsraten können durch flexible Multiplexer zu höheren Übertragungsraten zusammengefaßt werden.

Da ab einer Übertragungsrate von 155 Mbit/s der SDH-Standard kompatibel zum SONET-Standard ist, ermöglicht SDH gegenüber PDH eine vereinfachte internationale Datenkommunikation.

Bei ATM handelt es sich um eine verbindungsorientierte Paket-Übermittlungstechnik. Die digital vorliegenden Daten werden in Paketen fester Länge, sogenannten Zellen, übertragen und vermittelt. Die ATM-Zelle besteht aus einem 5-Byte-Zellenkopf für Adreß- und Steuerinformation und einem 48-Byte-Informationsfeld für die Daten. Bei Signalquellen, die eine konstante Bitrate erzeugen, ist der erzeugte ATM-Zellenstrom ebenfalls konstant, und die Zellen haben auf der Anschlußleitung einen konstanten Abstand. Signalquellen mit variabler Bitrate erzeugen einen nicht konstanten Zellenstrom. Hochbitratige Quellen haben eine hohe Zellenrate mit einem geringen Zellenabstand zur Folge. Bei niedrig bitratigen Quellen, wie z.B. Sprache, ist die Zellenrate gering, und dementsprechend der Zellenabstand hoch.

Die einzelnen Zellenströme werden in sogenannten Mulitplexern zusammengefaßt und innerhalb des Zellenrasters asynchron auf eine gemeinsame Leitung geschaltet. Da innerhalb eines Zellenrasterzeitpunkts immer nur eine Zelle auf die Multiplexleitung geschaltet werden kann, jedoch zu diesem Zeitpunkt durchaus mehr als eine Zelle gleichzeitig im Multiplexer zur Aussendung anstehen kann, müssen einige Zellen warten und zwischengespeichert werden. Dieser Umstand bewirkt eine zusätzliche Verzögerung von Zellen, die im Grunde genommen zufällig ist. Der Abstand der Zellen dieser Quellen wird dadurch verändert. Aus einem Zellenstrom mit konstanten Zellenabständen wird ein Zellenstrom mit variablen Zellenabständen (Zellenverklumpung).

An wichtigen Standorten mit Konzentration im Daten-, Rundfunk- und Studiobereich wurden in den letzten Jahren ATM-Vermittlungsstellen oder abgesetzte Einheiten (AAE) aufgebaut. ATM wird in Deutschland im Prinzip flächendeckend angeboten. Der Zugang zum Weitverkehrsbereich erfolgt in vielen Fällen über einen Service-Switch (Vermittlungsstelle) beim Anwender. Der Anwender wird mittels modularer Schnittstellenkarten an den Switch angeschlossen, die für alle gängigen Standards erhältlich sind.

Digitale Systeme, die zusammengeschaltet werden, müssen aufeinander synchronisiert werden, da sonst ein beträchtlicher Datenverlust hingenommen werden muß. Laufen die Taktversorgungen zweier gekoppelter Systeme zu stark auseinander, so muß das System sich gegebenenfalls auf den nächsten Rahmen des Übertragungssystems synchronisieren, wodurch ein Teil eines Rahmens verlorengeht. Diesen Vorgang bezeichnet man als Schlupf. Grundsätzlich kann man eine plesiochrone (nicht synchronisierte), eine gegenseitige Synchronisation und eine hierarchische Synchronisation (Master/Slave) unterscheiden.

Plesiochrone Netze bestehen aus Vermittlungsstellen, die alle über einen eigenen Takt verfügen. Jede Schnittstelle einer Vermittlungsstelle muß einzeln synchronisiert werden, bei zu großen Unterschieden können die oben angesprochenen Schlupfe auftreten. Diese Technik wird in der internationalen Ebene des Fernsprechnetzes angewendet.

Bei der gegenseitigen Synchronisation wird der Takt einer Vermittlungsstelle aus dem Mittel der empfangenen Takte gebildet. Da die Vermittlungsstellen meist stak miteinander vernetzt sind, erfolgt so eine gegenseitige Synchronisation aller Vermittlungsstellen. Auch bei diesem Verfahren ist der Schlupf nicht auszuschließen.

Bei der hierarchischen Master/Slave-Synchronisation wird das Netz entsprechend einer Hierarchie synchronisiert, d.h. die jeweils untere Ebene des Netzes synchronisiert sich auf die obere Ebene auf. Von den vielen Schnittstellen einer Vermittlungsstelle ist eine bestimmte als Takt-Referenz vorbestimmt. Bei einem Ausfall ist genau vorgeschrieben, auf welche Schnittstelle dann für die Taktregeneration zurückgegriffen wird.

Telekommunikationssysteme, die Verbindung zu standardisierten Übertragungsnetzen wie PDH, SDH oder SONET haben, erfordern in der Regel eine Synchronisation, um die notwendige Taktqualität an der Schnittstelle zum Übertragungsnetzwerk zu erreichen. Dabei werden zwei Betriebsarten der Synchronisation unterschieden. Im Falle einer externen Synchronisation wird dem System von einer externen Synchronisationsquelle ein Takt direkt zugeführt. Demgegenüber wird bei einer Synchronisation über die Übertragungsstrecke der Takt aus dem empfangenen Datenstrom der Schnittstelle gewonnen und dem System als Synchronisationsquelle zugeführt. Dazu erhalten die empfangenen Datenrahmen neben der Nutzinformation unter anderem auch Zusatzinformationen, die die Qualität des Taktsignals einer Gegenstelle beschreiben.

Ein digitales Vermittlungssystem wird durch einen internen Takt synchronisiert, der von einem zentralen Takt-Generator erzeugt wird. Ein solcher zentraler Takt-Generator arbeitet vorteilhafterweise im Master/Slave-Modus.

Telekommunikationssysteme, die mit standardisierten Übertragungsnetzen (PDH, SDH, SONET) verbunden sind, erfordern im allgemeinen eine Synchronisation der Teilsysteme. Nur so läßt sich die notwendige Taktqualität an der Schnittstelle zum Übertragungsnetz erreichen. Dazu wird der Clock-Master des Synchronisationssystems unter Steuerung durch einen Hauptprozessor mit einem externen Takt synchronisiert, der über eine Schnittstelle von einem der Übertragungssysteme erhalten wird. An einem zweiten Taktgenerator, der im Clock-Slave des zentralen Taktgenerators, liegt ebenfalls die externe Taktquelle an. Der Clock-Slave wird jedoch über ein Verbindungskabel auf den Takt des Clock-Masters synchronisiert. Auf diese Weise wird gewährleistet, daß das gesamte System durch genau eine externe Taktquelle synchronisiert wird.

Bei einem Vertausch der Master- und Slave-Funktion der beiden Taktgeneratoren des zentralen Takt-Generators koordiniert ein Hauptprozessor die Umschaltung und die parallele Aktualisierung einer Datenbank. Nachteilig an einer solchen Umschaltung ist, daß der notwendige Datenaustausch zwischen dem Hauptprozessor und den beiden Taktgeneratoren (Clock-Master, Clock-Slave) viel Zeit in Anspruch nimmt. Bei Ausfall oder Abschaltung des Clock-Masters kann es deshalb zu Verschiebungen der Taktfrequenz und damit zu Fehlern auf den Übertragungsstrekken kommen, wenn der Clock-Slave die Aufgabe des Clock-Masters nicht schnell genug übernehmen kann.

Es ist daher die Aufgabe der Erfindung, ein Verfahren zur Erzeugung eines internen Taktes und eine elektrische Schaltung mit einem zentralen Taktgenerator zur Erzeugung eines internen Taktes zu schaffen, die eine deutlich schnellere Umschaltung der Master- und Slave-Funktion der beiden Taktgeneratoren ermöglicht.

Diese Aufgabe wird für ein Verfahren durch die Merkmale des Patentanspruchs 1 und für eine elektrische Schaltung durch die Merkmale des Patentanspruchs 2 gelöst.

Vorteilhafte Ausgestaltungen der Erfindung sind in den Patentansprüchen 3 bis 10 angegeben.

Mit der Erfindung wird insbesondere erreicht, daß durch die Beschleunigung der Umschaltung der Master- und Slave-Funktion zwischen den Taktgeneratoren eines zentralen Taktgenerators das Auftreten von Fehlern bei der Verarbeitung minimiert wird.

Dadurch, daß die Steuerung einer Master-Slave-Konstellation der Taktgeneratoren in einem zentralen Taktgenerator über den Zustand der zwischen den Taktgeneratoren übertragenen Taktsignale gesteuert wird, ist kein aufwendiger Nachrichtenverkehr mit einem übergeordneten Prozessor mehr erforderlich. Ein Ausfall oder eine Abschaltung des Taktsignals auf dem Verbindungskabel wird von dem bisherigen Slave erkannt und als Auslöser angesehen, eine Master/Slave-Umschaltung vorzunehmen. Dadurch daß auf dem Verbindungskabel am ehemaligen Master ein Taktsignal ankommt, erkennt dieser, daß die Master-Funktion von dem ehemaligen Slave übernommen wurde und der ehemalige Master synchronisiert sich auf den Takt des neuen Masters auf. Es ist besonders vorteilhaft, daß dazu keine zusätzlichen Steuerleitungen und kein Nachrichtentransfer zwischen Master und Slave erforderlich ist, da die "Fehlermeldung" und das "Nutzsignal" über eine Verbindungsleitung gehen.

Vorteilhafterweise wird ein solches Verfahren bzw. ein solcher zentraler Taktgenerator in einem Telekommunikationssystem zur Übertragung von Daten über verschiedene Übertragungsnetze verwendet. Durch die beschleunigte Umschaltung der Generatorfunktionen kommt es zu keiner Verschiebung der Taktfrequenz und Fehler auf Übertragungsstrecken werden dadurch vermieden.

Clock-Master und Clock-Slave schicken Nachrichten über die Umschaltung an den Hauptprozessor. Diese aktualisiert daraufhin die zentrale Datenbasis und entsprechende Daten werden an die lokalen Datenbasen verteilt. Da Master und Slave den Hauptprozessor über die Umschaltung zuvor nicht informieren müssen, kann die Aktualisierung der zentralen Datenbasis in der zeitunkritischen Nachbehandlung durchgeführt werden. Dadurch kann die Umschaltung weiter beschleunigt werden.

Die Umschaltung der Master/Slave-Funktion kann auch auf ein Steuersignal des Hauptprozessors hin durchgeführt werden. Dazu ist es nur erforderlich, daß der Hauptprozessor den ehemaligen Slave informiert. Auf diese Weise wird der Nachrichtenverkehr, der für eine Umschaltung erforderlich ist, deutlich reduziert und nimmt weniger Zeit in Anspruch.

Einen solchen Umschaltbefehl kann der Hauptprozessor auch aufgrund eines externen Signals abgeben. Dadurch ist es möglich, daß mit geringem Aufwand ein Eingriff eines Bedieners zur Master/Slave-Umschaltung möglich ist.

Bevorzugte Ausführungsformen der Erfindung werden anhand der Zeichnung erläutert.

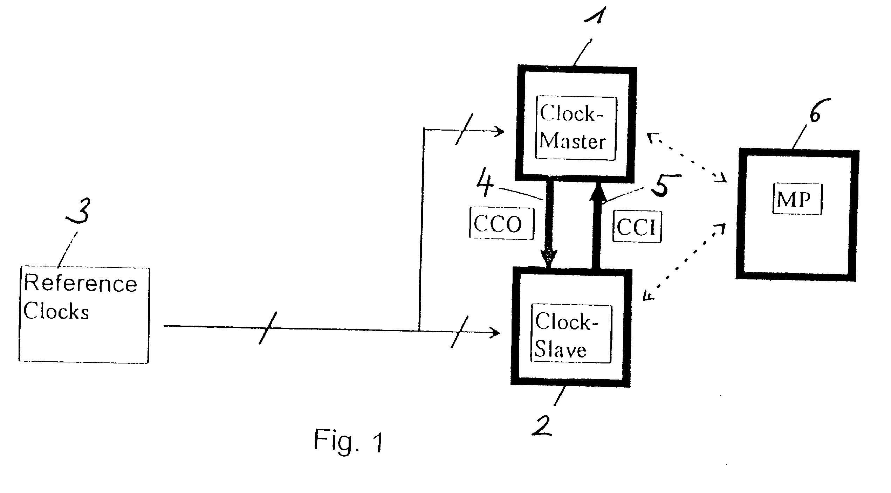

Fig. 1 zeigt die der Erfindung zugrunde liegende Konstellation eines zentralen Taktgenerators. Ein erster Taktgenerator 1 und ein zweiter Taktgenerator 2 werden jeweils mit einem externen Takt einer externen Taktquelle 3 versorgt. Zusätzlich sind Verbindungsleitungen 4, 5 zwischen den beiden Taktgeneratoren vorgesehen, damit diese den jeweils anderen Takt-generator bei Bedarf mit dem von ihnen erzeugten Takt versorgen können. Des weiteren ist in Fig. 1 ein Hauptprozessor 6 dargestellt, der in herkömmlichen zentralen Taktgeneratoren Umschaltungen in der Master/Slave-Funktion der Taktgeneratoren 1, 2 veranlaßt und koordiniert. Normalerweise werden beide Taktgeneratoren im Master/Slave-Betrieb betrieben. Dabei erzeugt der Clock-Master (Taktgenerator 1) ein Taktsignal, das synchron zu dem externen Referenztakt ist. Der zweite Taktgenerator 2, der Clock-Slave, ist zwar auch mit der externen Referenztaktquelle 3 verbunden, der Clock-Slave 2 erzeugt jedoch einen Takt in Synchronisation zu dem Takt des Clock-Masters 1, der ihm über die Verbindungsleitung 4 zur Verfügung gestellt wird.

Beim Auftreten eines Fehlers oder einer Störung auf der Verbindungsleitung 4 oder bei der Takterzeugung des Clock-Masters 1 gibt der Clock-Slave 2 herkömmlich ein Signal an den Hauptprozessor 6, sobald der Clock-Slave 2 die Störung mit Hilfe einer Detektionsvorrichtung erfaßt hat. Daraufhin veranlaßt der Hauptprozessor 6 eine Master/Slave-Umschaltung, so daß der bisherige Master die Slave-Rolle einnimmt und der bisherige Slave die Master-Rolle übernimmt. D.h., der Taktgenerator 2 erzeugt ein Taktsignal in Synchronisation zu dem Referenztakt und der Taktgenerator 1 erzeugt ein Taktsignal in Synchronisation zu dem von dem Taktgenerator 2 erzeugten Taktsignal, daß diesem über die Verbindungsleitung 5 zur Verfügung gestellt wird.

Um die Umschaltung einer Master/Slave-Konstellation zu beschleunigen, spielt der Hauptprozessor 6 bei der Umschaltung erfindungsgemäß keine Rolle mehr. Sobald der bisherige Clock-Slave 2 erkennt, daß das Taktsignal, das diesem vom bisherigen Clock-Master 1 über die Verbindungsleitung 4 zur Verfügung gestellt wird, gestört ist, übernimmt er automatisch die Master-Rolle, ohne auf Instruktionen des Hauptprozessors zu warten. Der bisherige Clock-Slave 2 erzeugt Taktsignale in Synchronisation zu dem externen Referenztakt und gibt diese Taktsignale an den bisherigen Clock-Master 1 über die Verbindungsleitung 5 weiter. Der Clock-Master enthält eine Detektionseinrichtung, die erkennt, wenn auf der Verbindungsleitung 5 ein Taktsignal bereitgestellt wird. Dadurch erkennt der Taktgenerator 1, daß der Taktgenerator 2 nicht in der Lage ist, das von ihm erzeugte Taktsignal ungestört über die Verbindungsleitung 4 zu empfangen. Der Taktgenerator 1 übernimmt daraufhin automatisch die Slave-Rolle und erzeugt ein Taktsignal in Synchronisation zu dem Taktsignal, das diesem über die Verbindungsleitung 5 bereitgestellt wird.

Anschließend wird der Hauptprozessor 6 von den Taktgeneratoren 1, 2 über die Umschaltung informiert, so daß dieser die zentrale Datenbasis aktualisieren und eine Verteilung an die lokalen Datenbasen veranlassen kann. Dieser Vorgang wird jedoch erst in der zeitunkritischen Nachbehandlung der Umschaltung durchgeführt.

## Patentansprüche

1. Verfahren zur Erzeugung eines internen Taktes in einer elektrischen Schaltung mit
einem ersten Taktgenerator,
einem zweiten Taktgenerator und
einem Anschluß für eine externe Referenztaktquelle,
wobei der erste Taktgenerator Taktsignale synchron zu Taktsignalen einer an den Anschluß angeschlossenen Referenztaktquelle erzeugt und diese dem zweiten Taktgenerator zur Verfügung stellt,
wobei der zweite Taktgenerator synchron zu den vom ersten Taktgenerator zur Verfügung gestellten Taktsignalen Taktsignale erzeugt,
**dadurch gekennzeichnet,**
daß der zweite Taktgenerator seine Taktsignale synchron zu den Taktsignalen der Referenztaktquelle erzeugt und die erzeugten Taktsignale dem ersten Taktgenerator zur Verfügung stellt, sobald der zweite Taktgenerator feststellt, daß die vom ersten Taktgenerator zur Verfügung gestellten Taktsignale gestört sind, und
daß der erste Taktgenerator seine Taktsignale synchron zu den vom zweiten Taktgenerator zur Verfügung gestellten Taktsignalen erzeugt, sobald der erste Taktgenerator die vom zweiten Taktgenerator zur Verfügung gestellten Taktsignale detektiert.

2. Elektrische Schaltung mit einem zentralen Taktgenerator zur Erzeugung eines internen Taktes, wobei der zentrale Takt-generator enthält:
einen ersten Taktgenerator (1),
einen zweiten Taktgenerator (2),
einen Anschluß für eine Referenztaktquelle (3),
eine erste schaltbare elektrische Verbindung (4) zwischen dem ersten Taktgenerator (1) und dem zweiten Taktgenerator (2) zur Weiterleitung eines Taktsignals von dem ersten Taktgenerator (1) an den zweiten Taktgenerator (2),
eine zweite schaltbare elektrische Verbindung (5) zwischen dem ersten Taktgenerator (1) und dem zweiten Taktgenerator (2) zur Weiterleitung eines Taktsignals von dem zweiten Takt-generator (2) an den ersten Taktgenerator (1),
wobei der erste Taktgenerator (1) und der zweite Taktgenerator (2) jeweils mit dem Anschluß für die Referenztaktquelle (3) elektrisch verbindbar sind,
wobei der erste Taktgenerator (1) ein Taktsignal erzeugt, das synchron zu einem über den Anschluß für die Referenztaktquelle zur Verfügung gestellten Taktsignal ist und dieses über die erste schaltbare Verbindung an den zweiten Taktgenerator (2) weiterleitet und wobei der zweite Taktgenerator (2) ein zum Takt des ersten Taktgenerators (1) synchrones Taktsignal erzeugt,
**dadurch gekennzeichnet,**
daß der zweite Taktgenerator (2) aufweist:
eine Detektionsvorrichtung zum Detektieren einer Störung in dem vom ersten Taktgenerator (1) zur Verfügung gestellten Taktsignal,
eine Umschaltvorrichtung (SEL 3) zur Auswahl eines Taktsignals, basierend auf dem der zweite Taktgenerator (2) sein Taktsignal erzeugt, wobei die Umschaltvorrichtung das vom ersten Taktgenerator (1) zur Verfügung gestellte Taktsignal als Basis auswählt, solange die Detektionsvorrichtung keine Störung detektiert, und wobei die Umschaltvorrichtung (SEL 3) das von einer Referenztaktquelle über den Anschluß zur Verfügung gestellte Taktsignal als Basis auswählt, wenn die Detektionsvorrichtung eine Störung detektiert, und eine Schaltvorrichtung zum Weiterleiten des von dem zweiten Taktgenerator (2) erzeugten Taktsignals an den ersten Taktgenerator (1), wenn die Detektionsvorrichtung eine Störung detektiert,
und daß der erste Taktgenerator (1) aufweist:
eine Detektionsvorrichtung zum Detektieren eines vom zweiten Taktgenerators (2) zur Verfügung gestellten Taktsignals und eine Umschaltvorrichtung (SEL 3)zur Auswahl eines Taktsignals, basierend auf dem der erste Taktgenerator (1) sein Taktsignal erzeugt, wobei die Umschaltvorrichtung (SEL 3) das von einer Referenztaktquelle über den Anschluß zur Verfügung gestellte Taktsignal als Basis auswählt, solange die Detektionsvorrichtung keine Störung detektiert, und wobei die Umschaltvorrichtung (SEL 3) das vom zweiten Taktgenerator (2) zur Verfügung gestellte Taktsignal als Basis auswählt, wenn die Detektionsvorrichtung eine Störung detektiert.

3. Elektrische Schaltung nach Anspruch 2,
**dadurch gekennzeichnet,**
daß der erste Taktgenerator (1) zusätzlich eine Schaltvorrichtung aufweist, um das vom ersten Taktgenerator (1) erzeugte Taktsignal nur dann an den zweiten Taktgenerator (2) weiterzuleiten, solange die Detektionsvorrichtung keine Störung detektiert.

4. Elektrische Schaltung nach Anspruch 2 oder 3,
**dadurch gekennzeichnet,**
daß der erste und der zweite Taktgenerator (1,2) jeweils eine Vorrichtung enthalten, die Daten an einen übergeordneten Hauptprozessor (MP) abgibt, um die Daten in einer zentralen Datenbasis zu aktualisieren, nachdem eine Umschaltung in den Umschaltvorrichtungen durchgeführt wurde.

5. Elektrische Schaltung nach einem der Ansprüche 2 bis 4,
**gekennzeichnet durch**
einen übergeordneten Hauptprozessor (MP), der durch ein Steuersignal die Umschaltung in den Umschaltvorrichtungen des ersten und zweiten Taktgenerators (1, 2) veranlassen kann.

6. Elektrische Schaltung nach Anspruch 5,
**dadurch gekennzeichnet,**
daß der Hauptprozessor (MP) die Umschaltung aufgrund eines externen Steuersignals, das insbesondere von einem Bediener erzeugt wurde, veranlaßt.

7. Elektrische Schaltung nach einem der Ansprüche 2 bis 6,
**dadurch gekennzeichnet,**
daß die elektrische Schaltung ein Telekommunikationssystem darstellt, das Daten über mindestens eines einer Mehrzahl verschiedener Übertragungsnetze überträgt, mit denen das Telekommunikationssystem verbunden ist.

8. Elektrische Schaltung nach Anspruch 7,
**dadurch gekennzeichnet,**
daß die Mehrzahl der Übertragungsnetze ein Übertragungsnetz gemäß dem SDH-Übertragungsstandard umfaßt.

9. Elektrische Schaltung nach Anspruch 7 oder 8,
**dadurch gekennzeichnet**,
daß die Mehrzahl der Übertragungsnetze ein Übertragungsnetz gemäß dem PDH-Übertragungsstandard umfaßt.

10. Elektrische Schaltung nach einem der Ansprüche 7 bis 9,
**dadurch gekennzeichnet,**
daß die Mehrzahl der Übertragungsnetze ein Übertragungsnetz gemäß dem SONET-Übertragungsstandard umfaßt.
